# EUROPEAN PATENT SPECIFICATION

(11) **EP 4 070 040 B1**
(45) Date of publication and mention of the grant of the patent: **04.11.2026**
(21) Application number: 20895044.4
(22) Date of filing: 03.12.2020
(51) Int. Cl.: G01D 21/00

(54) **OPERATIONAL CONDITION MONITORING SYSTEM**
BETRIEBSZUSTANDSÜBERWACHUNGSSYSTEM
SYSTÈME DE SURVEILLANCE D'ÉTAT DE FONCTIONNEMENT

(30) Priority: 03.12.2019 US 201962942998 P
(43) Date of publication of application: 12.10.2022
(73) Proprietor: Fluid Handling LLC, Morton Grove, Illinois 60053 (US)
(72) Inventor: GU, James, Buffalo Grove, Illinois 60089 (US); ROSCA, Florin, Niles, Illinois 60714 (US); ALDRIDGE, Tomm V., Olympia, Washington 98502 (US); CLARK, Stephen, Beverly, Massachusetts 01915 (US); GALZIN, Damien, 37260 Monts (FR)
(74) Representative: Wörz, Volker Alfred
(86) International application number: PCT/US2020/063026
(87) International publication number: WO 2021/113453

(56) References cited:
- WO-A1-2018/198111
- US-A1- 2015 287 318
- US-A1- 2015 287 318
- US-A1- 2019 324 434
- US-A1- 2019 324 434

## Description

### CROSS-REFERENCE TO RELATED APPLICATION

This application claims benefit to provisional patent application serial no. 62/942,998, filed 3 December 2019.

### BACKGROUND OF THE INVENTION

### 1. Field of the Invention

The present invention relates to a condition monitoring device; and more particularly relates to a condition monitoring device for machinery or equipment.

### 2. Brief Description of Related Art

There are known devices that monitor conditions of machinery or equipment. Condition monitoring devices according to the preamble of claim 1 are known from US 2019/ 324 434 A1. Similar condition monitoring devices are known from WO 2018/ 198 111 A1. By way of example, the known devices:
- Measure temperature with a sensor requiring contact with the surface to be measured;
- Measure vibration in 2 or 3 axes, and collect raw vibration data and calculate Root Mean Square (RMS) values;
- Estimate machine/pump run time based on run time of vibration measurements;
- Store up to 170 days of data based on taking hourly measurements;
- Are fully potted and cannot replace batteries;
- Are rated for function in explosion proof/intrinsically safe operating environments;
- Have LED indications for device operation and/or alarm status; and/or
- Transmit data via Bluetooth radio communication to a mobile app and/or Gateway (recently introduced to market).

The aforementioned provisional application includes a list of companies that provide one or more of the known devices.

Shortcomings of the Above Mentioned Known Devices:
By way of example, shortcomings of the known devices include one or more of the following:
Existing products use contact for thermal measurements, which requires mounting space and some level of intimate contact and/or compressive force for thermal measurements (e.g., either through magnetic, bolted or adhesive/epoxied mounting).
Some known devices have parts that require drilling and tapping of the rotational equipment for mounting of the measurement device.
Some known devices are not able to measure rotation direction.
Some known devices only measure 1 or 2 axis vibration.
Some known devices are only battery powered without an option for replacement of batteries.
Known devices have wireless communication methods. In some known devices, communication is to a dedicated hub, and cannot be networked directly from one measurement device to another.

In view of the aforementioned, there is a need in the industry for a better condition monitoring device for monitoring machinery or equipment.

### SUMMARY OF THE INVENTION

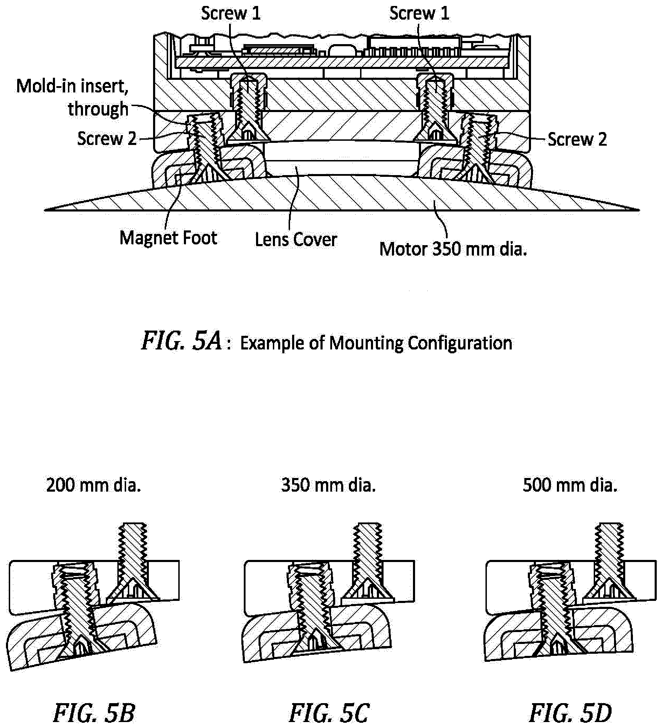

The invention is defined by a condition monitoring device according to claim 1. In summary, the present invention provides a new and unique condition monitoring device that may include a combination of the following:
- Non-contact sensing, e.g., infrared (IR), for thermal measurements, which eliminates the need for direct surface contact.
- Magnetic mounting to bearing housings, motor housings, or other rotation devices, to avoid drilling and tapping.
- Flexible mounting to a motor, bearing and other surfaces using magnetic and mechanical methods (see Figure 5A and 5B - Mounting Configuration).
- A magnetic flux sensor with Fast Fourier Transform (FFT) analysis into the sensing package allowing determination of many aspects of the motor/system condition, including but not limited to, the rotating direction, rotating speed, motor load, and motor health.
- A 3-axis vibration measurement with FFT analysis. The 3-axis vibration analysis allows for indications of potential bearing problems that could not be detected with 1 or 2 axis sensors.
- The option of using external power and/or replaceable internal battery power.
- An option for wired and wireless communication with a Gateway for faster communication and communication in environments which may be electromagnetically noisy.
- A capability of being networked to one another, creating a mesh network for an expanded communication range.
- A capability of interfacing with 3^{rd} party devices, including pressure sensors, flow sensors, temperature sensors, Variable Frequency Drives, etc.
- A magnetically actuated Reed switch to trigger wireless communication (e.g., Bluetooth) pairing.
- an LED configuration on the measurement device to indicate one or more functional states.
- A Unique User ID (UUID) from a combination of a visible Quick Response (QR) label arranged or printed on the measurement device and a hidden wireless communication (e.g., Bluetooth) chip identifier. This allows an operator who reviews the data to match the data to the visible QR code number, but also maintains security by having half the UUID hidden.
- Data collected through this condition monitoring system may be utilized in a machine learning system (i.e., digital twin) for predictive analysis purposes.

### Specific Embodiments

The present invention takes the form of a condition monitoring device for monitoring machinery or equipment, featuring a combination of on-board sensors and a condition monitoring module.

The combination of on-board sensors includes:
a non-contacting temperature sensing module configured to receive control signaling and provide a non-contacting temperature sensing signal containing information about a temperature of the machinery or equipment without direct surface contact between the non-contacting temperature sensing module and the machinery or equipment;
a magnet flux sensing module configured to receive the control signaling and provide a magnet flux sensing signal containing information about magnet flux sensed from the machinery or equipment; and
a 3-axis vibration measurement module configured to receive the control signaling and provide a 3-axis vibration measurement sensing signal containing information about a 3-axis vibration measurement of the machinery or equipment.

The condition monitoring module is configured to
provide the control signaling to the combination of on-board sensors,
receive a baseline operating condition signal containing information about a baseline operating condition of the machinery or equipment,
receive the non-contacting temperature sensing signal, the magnet flux sensing signal, and the 3-axis vibration measurement sensing signal from the combination of on-board sensors, and
provide a condition monitoring signal containing information about an operating condition of the machinery or equipment, based upon a data synthesis condition monitoring technique that synthesizes non-contact temperature sensing, magnetic flux and 3-axis vibration data received from the combination of on-board sensors, determines a current operating condition of the machinery or equipment, and compares the current operating condition and the baseline operating condition of the machinery or equipment to determine the operating condition.

The condition monitoring device may also include one or more of the following features:
The non-contacting temperature sensing module may be configured to provide infrared (IR) signaling to the machinery or equipment and receive reflected IR signaling from the machinery or equipment containing information about the temperature of the machinery or equipment.

The condition monitoring device may include a cover assembly configured to contain the combination of on-board sensors and condition monitoring module, the cover assembly having a bottom cover with an infrared sensor window configured therein; and the non-contacting temperature sensing module may be configured to provide the IR signaling through the infrared sensor window and receive the reflected IR signaling back through the infrared sensor window.

The magnet flux sensing module may be configured to implement a Fast Fourier Transform (FFT) analysis and determine a rotation direction, rotating speed, motor load and motor health of the machinery or equipment.

The 3-axis vibration measurement module may be configured to sense a 3-axis vibration of a motor shaft of the machinery or equipment and implement a 3-axis vibration analysis and detect potential bearing problems of the machinery or equipment that could otherwise not be detected using 1-axis or 2-axis vibration analysis. The 3-axis vibration analysis may include using an X-axis aligned to sense axial vibration of the motor shaft, a Y-axis aligned to sense horizontal vibration of the motor shaft and a Z-axis aligned to sense radial vibration of the motor shaft.

The condition monitoring module may be configured to implement a baseline operating condition technique in order to provide the control signaling to the combination of on-board sensors, determine the baseline operating condition signal containing information about the baseline operating condition of the machinery or equipment, and store the baseline operating condition signal, e.g., which gets implemented during an initialization of the condition monitoring device.

The control signaling may include a non-contacting IR temperature sensing control signal, a magnet flux sensing control signal and a 3-axis vibration measurement control signal for providing to the combination of on-board sensors.

The condition monitoring device may include a wireless communication module configured to exchange wireless communication signaling with another wireless communication enabled device, e.g., such as a smart phone, a laptop, a personal computer, a remote server, etc.

The wireless communication signaling may include the condition monitoring signal determined and provided by the condition monitoring device.

The wireless communication signaling may include, e.g., Bluetooth, Near Field or WiFI communication signaling.

According to the invention, the condition monitoring device includes an initial configuration module configured to respond to initial configuration signaling and turn ON the condition monitoring module.

The initial configuration signaling is magnetic signaling, e.g., caused by a user placing a magnet in relation to some part of the condition monitoring device.

The condition monitoring device may include a chip electronic ID module configured to receive the control signaling and provide chip electronic ID signaling containing information about a chip electronic ID (CHIP_ID) of the condition monitoring device.

The cover assembly may include a top cover having a QR code printed thereon containing information about the condition monitoring device.

The QR code may contain an ID_QR that is unique to the condition monitoring device.

The condition monitoring device may include a printed circuit board assembly having the combination of on-board sensors, the condition monitoring module, as well as other modules all configured thereon.

The top cover may include an X, Y, Z orientation indicator that is molded or affixed as a label.

The X, Y, Z orientation indicator may be configured with an X-axis indicator, a Y-axis indicator and a Z-axis indicator to orient the condition monitoring device so that the 3-axis vibration measurement module senses a 3-axis vibration of a motor shaft of the machinery with an X-axis alignment to sense axial vibration of the motor shaft, a Y-axis alignment to sense horizontal vibration of the motor shaft and a Z-axis alignment to sense radial vibration of the motor shaft.

### The Condition Monitoring System

### Wireless Pairing

According to some embodiments, the present invention may include, or take the form of, a condition monitoring system for monitoring machinery or equipment, e.g., having a condition monitoring device as described herein in combination with a wireless communication enabled device.

The condition monitoring device may include:
a wireless communication pairing module configured to provide wireless communication pairing signaling containing information for pairing the condition monitoring device, and
a cover assembly having a QR code arranged thereon to be scanned in order to receive QR code signaling containing information for pairing the condition monitoring device.

The wireless communication enabled device may include:
a QR scanning app configured to scan the QR code, and receive QR code signaling (e.g., from the Internet, from cellular data, etc.),and
a pairing app configured to receive the wireless communication pairing signaling generated by the condition monitoring device and the QR code signaling, and pair the wireless communication enabled device with the condition monitoring device based upon the signaling received.

The wireless communication pairing signaling may include an advertisement packet having a unique wireless communication chip electronic identification for identifying the condition monitoring device; and the QR code signaling may contain an ID_QR for providing back to the condition monitoring device after pairing.

The pairing app may be configured to provide unique user identification (UUID) signaling containing a combination of the QR code signaling and the wireless communication pairing signaling received.

The wireless communication pairing module may be configured to receive the UUID signaling, and determine an updated UUID signaling containing the ID_QR.

### Additional Sensors

Moreover, the condition monitoring system for monitoring machinery or equipment may include a condition monitoring device as disclosed herein, as well as a further combination of one or more sensors, including:
a pressure sensor configured to sense a pressure of a fluid being processed by the machinery or equipment and provide pressure sensor signaling containing information about the pressure sensed,
a flow rate sensor configured to sense a flow rate of the fluid being processed by the machinery or equipment and provide flow rate sensor signaling containing information about the flow rate sensed,
a fluid quality sensor configured to sense a quality of the fluid being processed by the machinery or equipment and provide fluid quality sensor signaling containing information about the fluid quality sensed,
a motor operating condition sensor configured to sense a condition of a motor operating the machinery or equipment and provide motor operating condition sensor signaling containing information about the condition sensed of the motor,
a motor load condition sensor configured to sense a load condition of a motor operating the machinery or equipment and provide motor load condition sensor signaling containing information about the load condition sensed of the motor,
a power consumption or efficiency sensor configured to sense a power consumption or efficiency of the machinery or equipment and provide power consumption or efficiency sensor signaling containing information about the power consumption or efficiency sensed of the machinery or equipment, and
a fluid viscosity sensor configured to sense a fluid viscosity of the fluid being processed by the machinery or equipment and provide fluid viscosity sensor signaling containing information about the fluid viscosity sensed.

In operation, the condition monitoring system may monitor the machinery or equipment, e.g., using data received in the associated signaling from these additional sensors together with the data from the combination of on-board sensors on the condition monitoring device. In addition, the condition monitoring device may also be suitably configured on-board with one or more of these additional sensors.

### BRIEF DESCRIPTION OF THE DRAWING

The drawing, which is not necessarily drawn to scale, includes the following Figures:

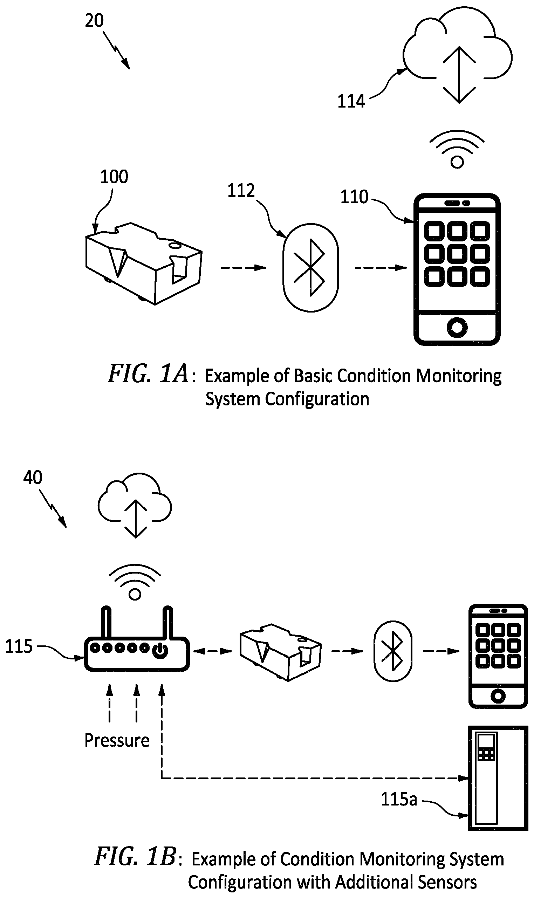

Figure 1A is a diagram of a condition monitoring system having a condition monitoring device coupled via Bluetooth to a wireless communication enable device, such as a smart phone or tablet, for providing a condition monitoring signal containing information about an operating condition of machinery or equipment, according to some embodiments of the present invention.
Figure 1B is a diagram of a condition monitoring system having a condition monitoring device coupled via Bluetooth to a wireless communication enable device, such as a smart phone or tablet, and also coupled to at least one other communication device receiving sensed signaling from at least one additional sensor, such as a pressure sensor, for providing a condition monitoring signal containing information about an operating condition of machinery or equipment, according to some embodiments of the present invention.

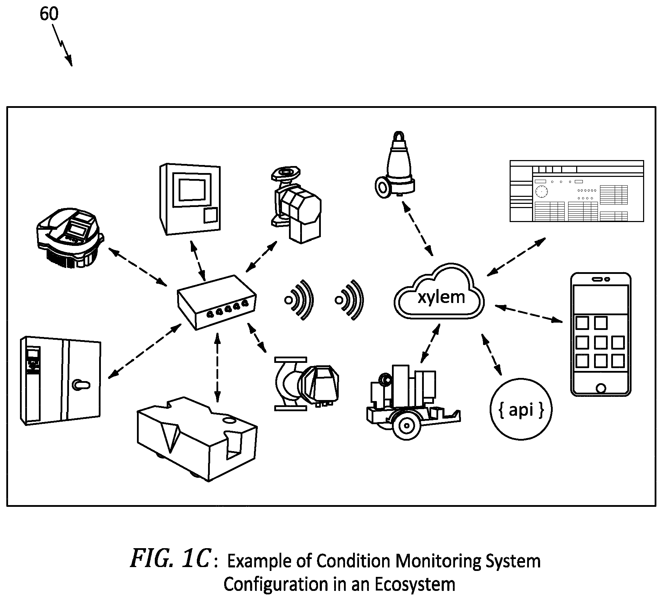

Figure 1C is a diagram of a condition monitoring system having a condition monitoring device coupled to a network having other devices and components, e.g., including machinery, such as pumps, a wireless communication enable device, such as a smart phone or tablet, and other remote wireless communication enable device, according to some embodiments of the present invention.

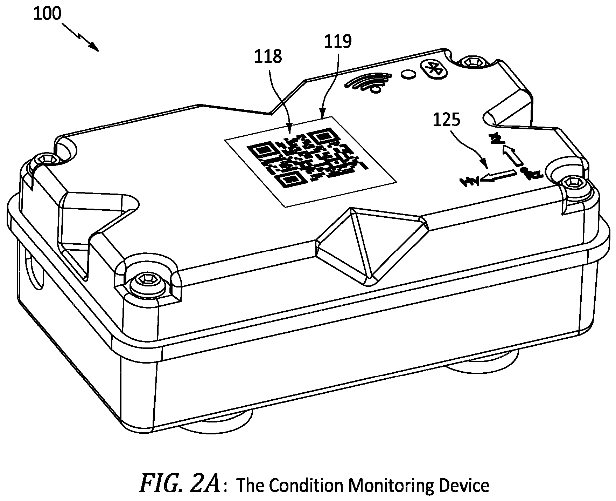

Figure 2A is a picture of a condition monitoring device having a Quick Response Code attached or printed thereon, according to some embodiments of the present invention.

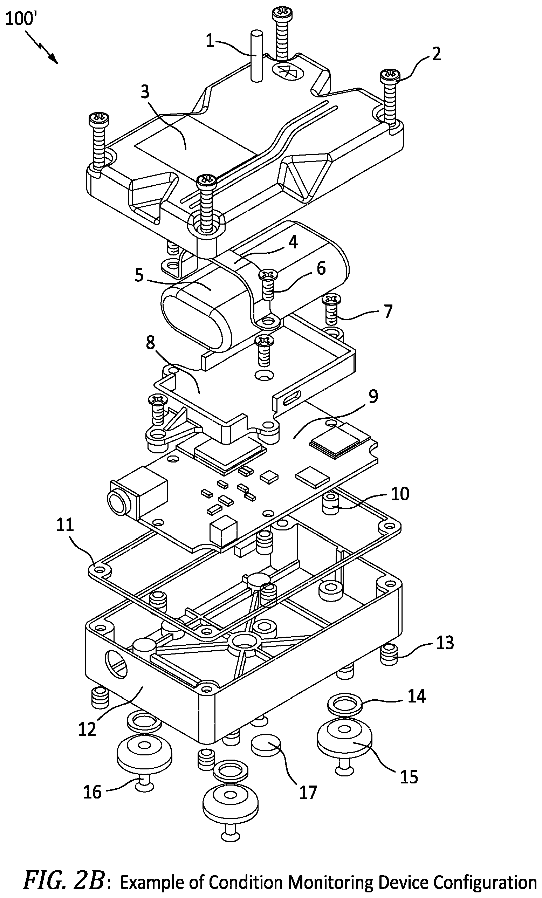

Figure 2B is an exploded view of a condition monitoring device having an LED tube, a top cover, a bottom cover, a battery strap, a replaceable battery pack, a battery holder, a printed circuit Board Assembly (PCBA), a lens, and numerous screws, according to some embodiments of the present invention.

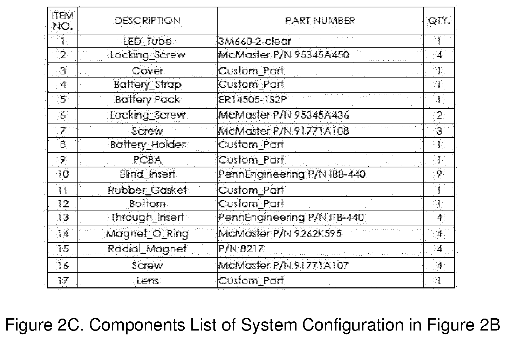

Figure 2C is a list of parts/component in the condition monitoring device shown in Figure 2B, according to some embodiments of the present invention.

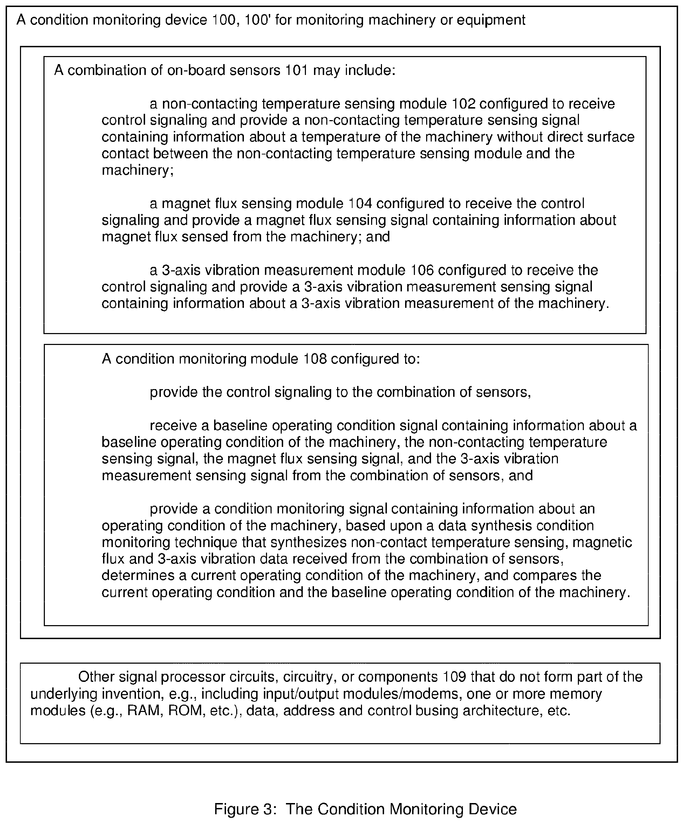

Figure 3 is a block diagram of a condition monitoring device, according to some embodiments of the present invention.

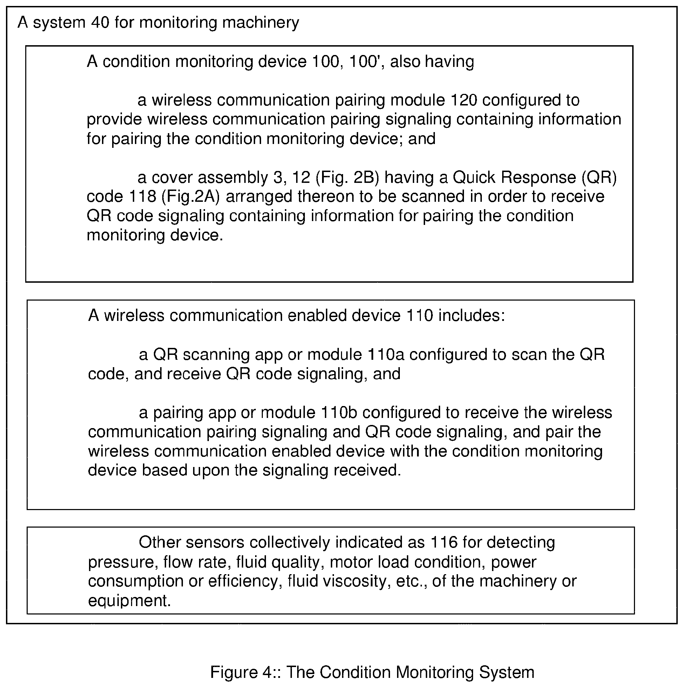

Figure 4 is a block diagram of a condition monitoring system, according to some embodiments of the present invention.
Figure 5A is a diagram of a mounting configuration, according to some embodiments of the present invention.
Figures 5B, 5C and 5D are diagrams of different mounting feet having different diameters (e.g., including 200 mm, 350 mm or 500 mm) that may form part of the mounting configuration in Figure 5A, according to some embodiments of the present invention.

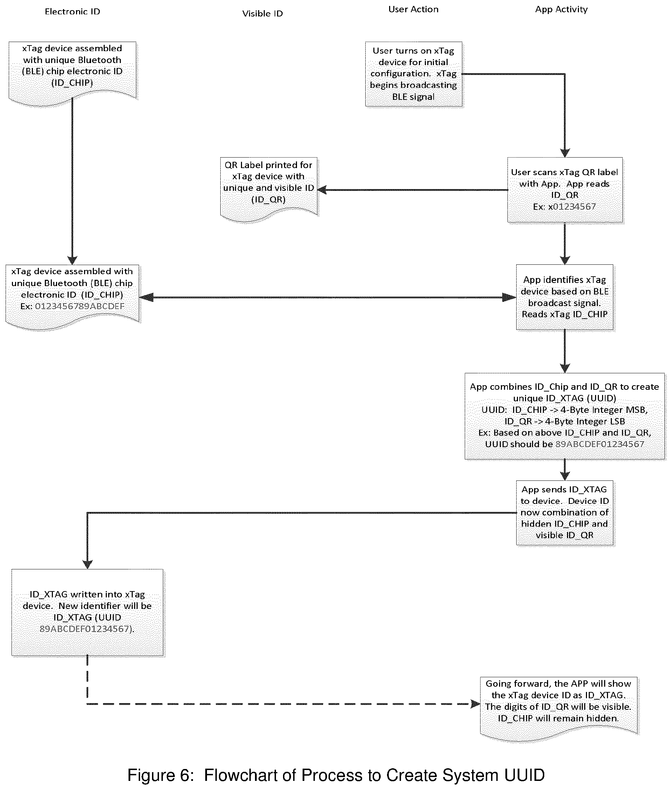

Figure 6 is a flowchart of a process to create a system UUID that includes an electronic ID, a visible ID, user action and app activity, according to some embodiments of the present invention. (In Figure 6, the term "xTag" is understood to refer to the condition monitoring device, which is also known and branded as the "Optimyze" device, e.g., as shown in Figure 2A.)

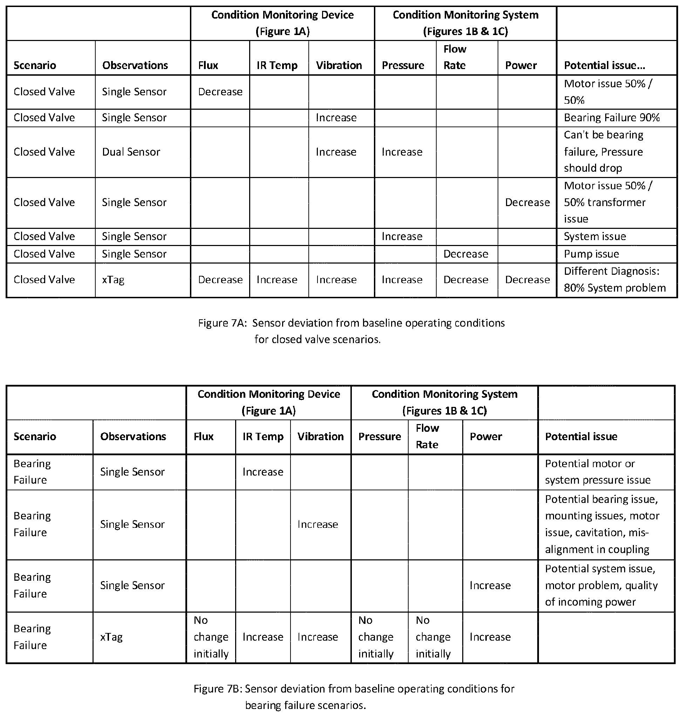

Figure 7A is a chart showing examples of sensor deviation from baseline operating conditions, which includes examples of closed valve scenarios, observations for a single sensor configuration, a dual sensor configuration and a three sensor configuration of the condition monitoring device (xTag) shown in Figure 1A and the condition monitoring systems in Figures 1B and 1C, flux sensing, IR temperature sensing, vibration sensing, pressure sensing, flow rate sensing, power sensing, along with potential issues for the single sensor configuration, the dual sensor configuration and the three sensor configuration of the condition monitoring device (xTag) shown in Figure 1A and the condition monitoring systems in Figures 1B and 1C having a different diagnosis when the data synthesis technique is implemented, according to some embodiments of the present invention.
Figure 7B is a chart showing examples of sensor deviation from baseline operating conditions, which includes examples of bearing failure scenarios, observations for a single sensor configuration, a dual sensor configuration and a three sensor configuration of the condition monitoring device (xTag) shown in Figure 1A and the condition monitoring systems in Figures 1B and 1C, flux sensing, IR temperature sensing, vibration sensing, pressure sensing, flow rate sensing, power sensing, along with potential issues for the single sensor configuration, the dual sensor configuration and the three sensor configuration of the condition monitoring device (xTag) shown in Figure 1A and the condition monitoring systems in Figures 1B and 1C when the data synthesis technique is implemented, according to some embodiments of the present invention.

Similar parts or components in Figures are labeled with similar reference numerals and labels for consistency. Every lead line and associated reference label for every element is not included in every Figure of the drawing to reduce clutter in the drawing as a whole.

### DETAILED DESCRIPTION OF THE INVENTION

According to the present invention, Figures 1A, 1B and 1C show condition monitoring systems 20, 40, 60 that use a condition monitoring device 100, 100' (aka "xTag") for measuring or sensing 3-axis vibration, temperature and magnetic flux of a rotating or static machinery or equipment (see Figure 1C). Embodiments include adding inputs from other sensors or instruments, including but not limited to, pressure sensors, water quality sensors, etc., which may include 3^{rd} party sensors, e.g., as shown in Figure 1B. A wireless communication device like element 115 (e.g., some near field communication (NFC) device) may be configured to receive pressure sensor signaling from a pressure sensor and condition monitoring signaling from the condition monitoring device 100, and provide wireless communication signaling containing information about the pressure sensor signaling and the condition monitoring signaling received, as shown in Figure 1B. The wireless communication device 115 may be controlled by a controller like element 115a. Measured or sensed data may be processed in the condition monitoring device 100. 100' and compared against, e.g., industry and/or user defined limits for acceptable operating levels of the rotating machinery, as well as compared against a baseline operating condition determined during some initialization of the condition monitoring device in relation to the rotating machinery, or some combination of the aforementioned. The condition monitoring device 100, 100' can store processed and raw data until transmission to a remote receiving device, e.g., which may include a handheld phone/tablet 110, as well as an Edge Gateway, Variable Frequency Drives, Building Management Systems (BMS), etc.

The processed data can be transmitted wirelessly (e.g., via Bluetooth 112, WiFi 114, or NFC 115) to the remote receiving device 110, e.g., as shown in Figures 1A, 1B, 1C. The remote receiving device 110 may be able to further process the data for historical trends and present the information to operators/engineers/building owners to provide insight into the functioning of the machinery or equipment and store the data remotely for collaboration with other engineers/operators or systems. Embodiments may include the remote receiving device configured to implement predictive failure analysis, prescriptive analysis to support optimization algorithms for operating conditions, replacement part ordering, etc.

The data from the condition monitoring device 100, 100' may provide operating information to technicians/engineers and building managers. The data can be used to guide maintenance and protect machinery, equipment or pumps from damage, increase uptime, or operating efficiency. The vibration and temperature data can provide insight to the condition of the machinery, equipment or pumps, e.g., including whether maintenance or replacement is necessary. The magnetic flux data can provide insight into the motor operating condition, direction, and loading, among other factors.

The combination of the data from the combination of multiple sensors can be used to assess the functioning of individual pieces of machinery and/or systems. The synthesis of data from the combination of the multiple sensors may provide more insightful information into the machinery, equipment and system functioning than could otherwise be determined by individual sensors alone. Examples of this feature and a further discussion thereof is developed in relation to the description of Figures 7A and 7B.

The condition monitoring system 20, 40, 60 may utilize Unique User IDs (UUID) created by combining unique identifiers internal to each condition monitoring device 100 and the condition monitoring device's external QR code 118 to create secure communications to the remote received device 110 and maintain a visual link between the data and each condition monitoring device via the QR code label 119. Examples of this feature and a further discussion thereof is developed in relation to the description of Figure 6.

According to some embodiments, the condition monitoring system 20, 40, 60 may include one or more additional sensors collectively identified as 116 ((Fig. 4) for measurements of flow rates, temperatures of fluids, fluid pressures, water quality monitoring, motor operating conditions, load conditions, rotating direction, power consumption / efficiency, rotating frequency, fluid viscosity, etc. However, the invention is not intended to be limited to the type or kind of the one or more additional measurements, e.g., including types or kinds now known or later developed in the future.

The condition monitoring device or edge gateway may interface with a Variable Frequency Drive (VFD), e.g., including VFDs using sensorless technology, to optimize pumping operations and improve system efficiency.

According to some embodiments, the present invention may be implemented with Bluetooth transmission capability, e.g., as shown in Figures 1A, 1B, 1C. However, embodiments are envisioned, and the invention is intended to include, using implementation with WiFi and/or NFC capability and may or may not include Gateway access. Moreover, embodiments are envisioned, and the invention is intended to include, using other types or kinds of communication protocol, e.g., including types or kinds now known or later developed in the future. Condition monitoring devices may also be networked together with wired or wireless technology to create a network of measurement devices and support communication across larger distances.

The addition of the WiFi communication 114 with a Gateway (or other communication device) will enable remote, real-time monitoring of the condition monitoring device (Figure 1A below), and consequently system performance.

The vibration and temperature data can provide insight to the machinery's, equipment's or asset's condition and whether maintenance or replacement is necessary. The magnetic flux data can provide insight into the motor operating condition, direction, and loading, among other factors, of the machinery.

In addition to monitoring equipment, the condition monitoring device may support the creation of a fixed asset location management system. Through the process of pairing the condition monitoring device via Bluetooth to a mobile device, and using the mobile device's location services (GPS), it is possible to create a map of fixed asset enabling more efficient supervision and maintenance of the machinery or equipment over time.

### The X, Y, Z Orientation Indicator 125

According to some embodiments, the condition monitoring device 100 may include an X, Y, Z orientation indicator 125, e.g., as shown in Figure 2A, which may be molded on the the top cover 3, or affixed as a label, etc.

The X, Y, Z orientation indicator 125 may be used to orient the condition monitoring device 100 so that the 3-axis vibration measurement module 106 (Fig. 3) may properly sense a 3-axis vibration of a motor shaft of the machinery, implement the 3-axis vibration analysis and detect potential bearing problems of the machinery that could not otherwise be detected using 1-axis or 2-axis vibration analysis. The X, Y, Z orientation indicator 125 allows the user to orient the condition monitoring device 100 into an X-axis alignment to sense axial vibration of the motor shaft, a Y-axis alignment to sense horizontal vibration of the motor shaft, and a Z-axis alignment to sense radial vibration of the motor shaft.

### Unique User ID

By way of example, and according to some embodiments of the present invention, a variable UUID setting procedure may be implemented as follows:
The Parameters
ID_CHIP: The internal chip identification. It is unique for every xTag.
ID_XTAG_SVC_ID: The xTag BLE (Bluetooth) service id. All xTag(s) share the same value. Immutable.
ID_QR: The ID_QR is read back from a QR code 118, e.g., as a 4-byte integer.
ID_DB: The ID_DB is stored in database.
ID_XTAG: The ID_XTAG is broadcasted in user data section from the xTag, a combination of ID_CHIP and a user assigned UID.

By way of example, the format may take the form of:
aa aa aa aa bb bb bb bb, where
aa aa aa aa: a 4 byte fixed id presenting the unique ID_CHIP; and
bb bb bb bb: the user assigned UID, default value 00 00 00 00.

### Example of an Implementation

1. During manufacturing, the manufacturer prints a computer generated ID onto a QR code (e.g., assuming that the id is 0x12345678). The Xtag reads back its own ID_CHIP (assuming it is 0x98765432) Therefore, ID_QR=0x12345678, ID_CHIP=0x98765432, and the combined ID_XTAG **before configuration** is ID_XTAG=0x9876543200000000. The ID_QR is **NOT** saved into the xTag at this point.
2. The user turns on the xTag, e.g., with a magnet for initial configuration. The Xtag starts to broadcast an advertisement packet. The packet data format may take the form of: a random mac address, a flag, an ID_XTAG_SVC_ID and an ID_XTAG (e.g., 0x9876543200000000+). The "+" sign is an extra bit that means the xTag is under or still in its configurating mode.
3. The wireless enabled mobile device has a user app that scans the QR code 118 (Fig. 2A), getting the ID_QR (e.g., 0x12345678).
4. The mobile user app scans all BLE devices in the local region. By way of example, the mobile user app may get a list like this:
   a. MAC1, flag, svc id1, user data1
   b. MAC2, flag, svc id2,
   c. MAC3, flag, svc id3, user data2
   d. MAC4, flag, ID_XTAG_SVC_ID, ID_XTAG (0x9876543200000000+) (e.g., this is an xTag, configurable)
5. The mobile user app compares the svc id with the ID_XTAG_SVC_ID, discarding all non-relative BLE device (e.g., devices a , b, and c). In addition, the extra "x" bit in the user data section indicating this xTag in under its configuring mode. The mobile user app pinpoints out the xTag of device d and returns it to the user.
6. The mobile user app initiates the pairing with an internal stored pairing key and exchanges an encryption key. A secured connection is established between the condition monitoring device (xTag) and the wireless enabled mobile device.
7. The user sets the threshold values and **write the ID_QR** (0x12345678) **into the xTag.** In addition, the app writes the ID_QR (0x12345678) to its local database and iCloud. **Starting from this point, ID_XTAG=**0x9876543212345678
8. The user closes the BLE connection and removes the magnet.
9. The Xtag enters its recording mode.
10. After certain time, a maintenance engineer holds the handheld device (i.e., wireless enabled mobile device) close to the xTag. The mobile user app scans all BLE devices in the local region. By way of example, the app gets a list.
   a. MAC1, flag, svc id1, user data1
   b. MAC2, flag, svc id2,
   c. MAC3, flag, svc id3, user data2
   d. MAC4, flag, ID_XTAG_SVC_ID, ID_XTAG1(0x9876543212345678) (this is one xTag, the one configurated previously, non-configurable)
   e. MAC5, flag, ID_XTAG_SVC_ID, ID_XTAG2(0x4433221145678901) (this is another xTag. non-configurable )
11. The mobile user app discards all BLE device with different svc id (e.g., device a, b and c), so only lines for devices d and e is left.
12. The mobile user app reads back the record from xTag d and e one by one and closes the connection.
13. The mobile user app stores the data read into local database and iCloud with the same id, e.g., the data from xTag with ID_XTAG1(0x9876543212345678) stores into the database record with ID_DB1(0x12345678).
14. Because the xTag is not under its configuring mode, all attempts to change the settings are discarded.
15. As a backup method, the user assigned UID can be retrieved by the device information service.

### Data Synthesis for Improved Diagnostics

The combination of the data from multiple sensors can be used to improve the assessment of individual pieces of machinery, equipment and/or systems. The synthesis of data from multiple sensors will provide more insightful information into machinery, equipment and system functioning than can be determined by using individual sensors alone. By way of example, and according to some embodiments of the present invention, the data synthesis condition monitoring technique is best illustrated through the following examples.

### Example 1:

The motor driving a pump in a particular closed loop system is being monitored with a flux monitoring module, e.g., on-board the condition monitoring device. The flux monitoring module shows a reduction in motor flux, which could lead a technician to suspect an issue with the motor. The technician could then check the drive unit and see that the power has also dropped. The issue could now be with the motor or with incoming power.

Additional sensors data, such as an increase in a vibration sensor on the pump or temperature increase in the pump, would help the technician rule out motor or incoming power issues, and guide the technician to investigate system issues - such as a closed valve in the system that is causing the pump to dead head.

The table in Figure 7A identifies potential problems associated with identifying changes when using individual sensors or pairs of sensors. The last row of the table in Figure 7A for the xTag shows how the use of the combination of all the multiple sensors provides a more complete analysis of the system and machinery and will lead to a diagnosis of the problem with higher confidence than when analyzing data from any single or dual sensor as shown in the other six (6) rows above it.

By way of example, the condition monitoring device according to the present invention will receive sensed signaling containing information/data about the flux, IR temp and vibration sensed, as well as the pressure, flow rate and power sensed, implement the data synthesis condition monitoring technique, provide a condition monitoring signal containing indications of the flux, IR temp and vibration sensed, as well as pressure, flow rate and power sensed, and may also provide a further indication of potential issues re closed valve when so determined. In other words, if the data synthesis condition monitoring technique determines that there are no potential issues re closed valve condition so determined, then the condition monitoring device may provide no further indication, e.g., for review by the technician, etc.

### Example 2:

By way of further example, consider a second scenario in which a temperature increase is identified on a motor of the machinery or equipment. This could be caused by a system restriction increasing the load, or an issue within the motor itself. Now, add in a second sensor indicating that vibration has increased, and also and a third sensor indicating that power has increased. Combined with other sensors showing stable flow rate and pressure (i.e., system is functioning correctly), increasing the confidence in properly diagnosing a motor bearing failure increases significantly.

The combination of data from multiple sensors creates a more holistic view of the system function allowing diagnosis of potential problems with higher accuracy. The data gather over time in which a condition monitoring device (xTag) provides functional data into a larger ecosystem of remote and on-board sensors (Figure 1C), will allow a diagnosis of potential issues in advance as small perturbations are identified earlier before they become system level down-time problems.

The last row of the table in Figure 7B for the xTag shows how the use of the combination of all the multiple sensors provides a more complete analysis of the system and machinery and will lead to a diagnosis of the problem with higher confidence than when analyzing data from any single sensor as shown in the other four (4) rows above it.

By way of further example, the condition monitoring device according to the present invention will receive sensed signaling containing information/data about the flux, IR temp and vibration sensed, as well as pressure, flow rate and power sensed, implement the data synthesis condition monitoring technique, provide a condition monitoring signal containing indications of the flux, IR temp and vibration sensed, as well as pressure, flow rate and power sensed, and may also provide a further indication of potential issues re bearing failure when so determined. In other words, if the data synthesis condition monitoring technique determines that there are no potential issues re bearing failure so determined, then the condition monitoring device may provide no further indication, e.g., for review by the technician, etc.

### The Data Synthesis Condition Monitoring Technique

The data synthesis condition monitoring technique is understood to be a data processing tool that gathers and continues to learn information/data about the machinery or equipment being monitored, builds an ongoing processing tool database, identifies potential issues based upon the processing tool database, and provides suitable indication in the condition monitoring signal regarding the same. The data processing tool may include user defined limits or industry threshold limits suitably programmed therein, etc. One skilled in the art after reading the instant disclosure would be able to implement, further develop out and expand onto the data synthesis condition monitoring technique disclosed herein, which is continuously building an on-going time dependent database.

### Wireless Pairing

According to some embodiments, the present invention may include, or take the form of, a condition monitoring system 20, 40, 60 for monitoring machinery or equipment, e.g., having a condition monitoring device 100, 110' as described herein in combination with a wireless communication enabled device.

The condition monitoring device 100, 110' may include:
a wireless communication pairing module 120 configured to provide wireless communication pairing signaling containing information for pairing the condition monitoring device, and
a cover assembly 3, 12 (Fig. 2B) having a QR code 118 arranged thereon to be scanned in order to receive QR code signaling containing information for pairing the condition monitoring device.

The wireless communication enabled device 110 may include:
a QR scanning app 110a configured to scan the QR code 118, and receive QR code signaling (e.g., from the Internet, from cellular data, etc.),and
a pairing app or module 110b configured to receive the wireless communication pairing signaling generated by the condition monitoring device, receive the QR code signaling, and pair the wireless communication enabled device with the condition monitoring device based upon the signaling received.

### The Modules 102, 104, 106, 108, 110a, 110b

By way of example, the functionality of the modules 102, 104, 106, 108, 110a, 110b can be implemented using hardware, software, firmware, or a combination thereof. In a typical software implementation, the modules 102, 104, 106, 108, 110a, 110b would include one or more microprocessor-based architectures having, e. g., at least one signal processor or microprocessor. A person skilled in the art would be able to program such a microcontroller (or microprocessor)-based implementation to perform the functionality described herein without undue experimentation. The invention is not intended to be limited to any particular implementation using technology either now known or later developed in the future. The invention is intended to include implementing the functionality of the processors as stand-alone processor or processor module, as separate processor or processor modules, as well as some combination thereof.

The modules 102, 104, 106, 108, 110a, 110b may also include other signal processor circuits or components 109, e.g., including memory modules like random access memory (RAM) and/or read only memory (ROM), input/output devices and control, and data and address buses connecting the same, and/or at least one input processor and at least one output processor.

### List of Possible Applications

The condition monitoring system can be used in any application with rotating machinery or equipment. By way of example, core applications may include:
- Process critical industrial pumps
- HVAC pumps
- Water and wastewater pumps
- Industrial equipment
- Oscillating equipment
- Etc.

### The Invention

The embodiments shown and described in detail herein are provided by way of example only; and the invention is not intended to be limited to the particular configurations, dimensionalities, and/or design details of these parts or elements included herein. In other words, one skilled in the art would appreciate that design changes to these embodiments may be made and such that the resulting embodiments would be different than the embodiments disclosed herein, but would still be within the present invention.

It should be understood that, unless stated otherwise herein, any of the features, characteristics, alternatives or modifications described regarding a particular embodiment herein may also be applied, used, or incorporated with any other embodiment described herein.

Although the invention has been described and illustrated with respect to exemplary embodiments thereof, the foregoing and various other additions and omissions may be made therein and thereto without departing from the present invention which is defined by the appended claims.

## Claims

1. A condition monitoring device (100; 100') for monitoring machinery or equipment, comprising
a combination of on-board sensors (101) that include
a non-contacting temperature sensing module (102) configured to receive control signaling and provide a non-contacting temperature sensing signal containing information about a temperature of the machinery or equipment without direct surface contact between the non-contacting temperature sensing module and the machinery or equipment,
a magnet flux sensing module (104) configured to receive the control signaling and provide a magnet flux sensing signal containing information about magnet flux sensed from the machinery or equipment, and
a 3-axis vibration measurement module (106) configured to receive the control signaling and provide a 3-axis vibration measurement sensing signal containing information about a 3-axis vibration measurement of the machinery or equipment; and
a condition monitoring module (108) configured to
provide the control signaling to the combination of on-board sensors (101),
receive a baseline operating condition signal containing information about a baseline operating condition of the machinery or equipment,
receive the non-contacting temperature sensing signal, the magnet flux sensing signal, and the 3-axis vibration measurement sensing signal from the combination of on-board sensors (101), and
provide a condition monitoring signal containing information about an operating condition of the machinery or equipment, based upon a data synthesis condition monitoring technique that synthesizes non-contact temperature sensing, magnetic flux and 3-axis vibration data received from the combination of on-board sensors (101), determines a current operating condition of the machinery or equipment, and compares the current operating condition and the baseline operating condition of the machinery or equipment to determine the operating condition,
**characterized in that** the condition monitoring device (100; 100') comprises an initial configuration module configured to respond to initial configuration signaling and turn ON the condition monitoring module (108), where the initial configuration signaling is magnetic signaling, such as caused by placing a magnet in relation to some part of the condition monitoring device.

2. The condition monitoring device (100; 100') according to claim 1, wherein
the non-contacting temperature sensing module (102) is configured to provide infrared (IR) signaling to the machinery and receive reflected IR signaling from the machinery containing information about the temperature of the machinery; and wherein preferably
the condition monitoring device (100; 100') comprises a cover assembly (3, 12) configured to contain the combination of on-board sensors (101) and condition monitoring module (108), the cover assembly (3, 12) having a bottom cover (12) with an infrared sensor window configured therein; and
the non-contacting temperature sensing module (102) is configured to provide the IR signaling through the infrared sensor window and receive the reflected IR signaling back through the infrared sensor window.

3. The condition monitoring device (100; 100') according to claim 1 or 2, wherein the magnet flux sensing module (104) is configured to implement a Fast Fourier Transform (FFT) analysis and to determine a rotation direction, rotating speed, motor load and motor health of the machinery.

4. The condition monitoring device (100; 100') according to one of the preceding claims, wherein the 3-axis vibration measurement module (106) is configured to sense a 3-axis vibration of a motor shaft of the machinery and implement a 3-axis vibration analysis and to detect potential bearing problems of the machinery that could not be detected using 1-axis or 2-axis vibration analysis, including where the 3-axis vibration analysis includes using an X-axis aligned to sense axial vibration of the motor shaft, a Y-axis aligned to sense horizontal vibration of the motor shaft and a Z-axis aligned to sense radial vibration of the motor shaft.

5. The condition monitoring device (100; 100') according to one of the preceding claims, wherein the condition monitoring module (108) is configured to implement a baseline operating condition technique in order to provide the control signaling to the combination of on-board sensors (101), determine the baseline operating condition signal containing information about the baseline operating condition of the machinery, and store the baseline operating condition signal.

6. The condition monitoring device (100; 100') according to one of the preceding claims, wherein the control signaling includes a non-contacting IR temperature sensing control signal, a magnet flux sensing control signal and a 3-axis vibration measurement control signal for providing to the combination of on-board sensors (101).

7. The condition monitoring device (100; 100') according to one of the preceding claims, wherein the condition monitoring device (100; 100') comprises a wireless communication module (115) configured to exchange wireless communication signaling with another wireless communication enabled device (110).

8. The condition monitoring device (100; 100') according to claim 7, wherein the wireless communication signaling includes the condition monitoring signal, and/or includes Bluetooth (112), Near Field (115) or WiFI (114) communication signaling.

9. The condition monitoring device (100; 100') according to one of the preceding claims, wherein the condition monitoring device (100; 100') comprises a chip electronic ID module configured to receive the control signaling and provide chip electronic ID signaling containing information about a chip electronic ID (CHIP_ID) of the condition monitoring device (100; 100').

10. The condition monitoring device (100; 100') according to one of the preceding claims, wherein the condition monitoring device (100; 100') comprises a cover assembly (3, 12) configured to contain the combination of on-board sensors (101) and the condition monitoring module (108), and the cover assembly (3, 12) has a top cover (3) having a Quick Response (QR) code (118) printed thereon containing information about the condition monitoring device (100; 100'), and preferably where the QR code (118) contains an ID_QR that is unique to the condition monitoring device (100; 100').

11. The condition monitoring device (100; 100') according to one of the preceding claims, wherein the condition monitoring device (100; 100') comprises a printed circuit board assembly (9) having the combination of on-board sensors (101) and the condition monitoring module (108) all configured thereon.

12. The condition monitoring device (100; 100') according to one of the preceding claims, wherein the condition monitoring device (100; 100') comprises a cover assembly (3, 12) having a top cover (3) with an X, Y, Z orientation indicator (125) that is molded or affixed as a label, preferably including where the X, Y, Z orientation indicator (125) is configured to orient the condition monitoring device (100; 100') so that the 3-axis vibration measurement module senses a 3-axis vibration of a motor shaft of the machinery with an X-axis alignment to sense axial vibration of the motor shaft, a Y-axis alignment to sense horizontal vibration of the motor shaft and a Z-axis alignment to sense radial vibration of the motor shaft.

13. A system (20; 40; 60) for monitoring machinery, wherein the system comprises a condition monitoring device (100; 100') according to claim 7, wherein
the system includes:
a wireless communication pairing module (120) configured to provide wireless communication pairing signaling containing information for pairing the condition monitoring device (100; 100');
a cover assembly (3, 12) having a Quick Response (QR) code (118) arranged thereon to be scanned in order to receive QR code signaling containing information for pairing the condition monitoring device (100; 100'); and
a wireless communication enabled device (110) includes:
a QR scanning app (110a) configured to scan the QR code (118), and receive QR code signaling, and
a pairing app (110b) configured to receive the wireless communication pairing signaling and the QR code signaling, and pair the wireless communication enabled device (110) with the condition monitoring device (100; 100') based upon the signaling received; and wherein
preferably the wireless communication pairing signaling includes an advertisement packet having a unique wireless communication chip electronic identification for identifying the condition monitoring device (100; 100'); and
the QR code signaling contains an ID_QR for providing back to the condition monitoring device (100; 100'), preferably including where the pairing app (110b) is configured to provide unique user identification, referred to hereinafter as UUID, signaling containing a combination of the QR code signaling and the wireless communication pairing signaling received, and preferably further including where the wireless communication pairing module (120) is configured to receive the UUID signaling, and determines an updated UUID signaling containing the ID_QR.

14. A system (20; 40; 60) for monitoring machinery, the system comprises a condition monitoring device (100; 100') according to one of claims 1 to 12, wherein
the system (20; 40; 60) further comprises a further combination of one or more sensors, including:
a pressure sensor configured to sense a pressure of a fluid being processed by the machinery and provide pressure sensor signaling containing information about the pressure sensed,
a flow rate sensor configured to sense a flow rate of the fluid being processed by the machinery and provide flow rate sensor signaling containing information about the flow rate sensed,
a fluid quality sensor configured to sense a quality of the fluid being processed by the machinery and provide fluid quality sensor signaling containing information about the fluid quality sensed,
a motor operating condition sensor configured to sense a condition of a motor operating the machinery and provide motor operating condition sensor signaling containing information about the condition sensed of the motor,
a motor load condition sensor configured to sense a load condition of a motor operating the machinery and provide motor load condition sensor signaling containing information about the load condition sensed of the motor,
a power consumption or efficiency sensor configured to sense a power consumption or efficiency of the machinery and provide power consumption or efficiency sensor signaling containing information about the power consumption or efficiency sensed of the machinery, and
a fluid viscosity sensor configured to sense a fluid viscosity of the fluid being processed by the machinery and provide fluid viscosity sensor signaling containing information about the fluid viscosity sensed.

## Patentansprüche

1. Eine Zustandsüberwachungsvorrichtung (100; 100') zur Überwachung von Maschinen oder Anlagen, umfassend
eine Kombination aus integrierten Sensoren (101), die umfassen:
ein berührungsloses Temperaturerfassungsmodul (102), das ausgebildet ist, Steuersignale zu empfangen und ein berührungsloses Temperaturerfassungssignal bereitzustellen, das Informationen über eine Temperatur der Maschine oder Anlage enthält, ohne dass ein direkter Oberflächenkontakt zwischen dem berührungslosen Temperaturerfassungsmodul und der Maschine oder Anlage besteht,
ein Magnetflusserfassungsmodul (104), das ausgebildet ist, die Steuersignale zu empfangen und ein Magnetflusserfassungssignal bereitzustellen, das Informationen über den von der Maschine oder Anlage erfassten Magnetfluss enthält, und
ein 3-Achsen-Schwingungsmessmodul (106), das ausgebildet ist, die Steuersignale zu empfangen und ein 3-Achsen-Schwingungsmesssignal bereitzustellen, das Informationen über eine 3-Achsen-Schwingungsmessung der Maschine oder Anlage enthält; und
ein Zustandsüberwachungsmodul (108), das ausgebildet ist,
der Kombination aus integrierten Sensoren (101) die Steuersignale bereitzustellen,
ein Basisbetriebszustandssignal zu empfangen, das Informationen über einen Basisbetriebszustand der Maschine oder Anlage enthält,
das berührungslose Temperaturerfassungssignal, das Magnetflusserfassungssignal und das 3-Achsen-Schwingungsmesssignal von der Kombination aus integrierten Sensoren (101) zu empfangen und
ein Zustandsüberwachungssignal bereitzustellen, das Informationen über einen Betriebszustand der Maschine oder Anlage enthält, auf der Grundlage eines datensynthetisierenden Zustandsüberwachungsverfahrens, das die von der Kombination aus integrierten Sensoren (101) empfangenen berührungslosen Temperaturerfassungs-, Magnetfluss- und 3-Achsen-Schwingungsdaten synthetisiert, einen aktuellen Betriebszustand der Maschine oder Anlage ermittelt und den aktuellen Betriebszustand mit dem Basisbetriebszustand der Maschine oder Anlage vergleicht, um den Betriebszustand zu bestimmen,
**dadurch gekennzeichnet, dass** die Zustandsüberwachungsvorrichtung (100; 100') ein Erstkonfigurationsmodul umfasst, das ausgebildet ist, auf Erstkonfigurationssignalisierung zu reagieren und das Zustandsüberwachungsmodul (108) einzuschalten, wobei die Erstkonfigurationssignalisierung eine magnetische Signalisierung ist, wie sie beispielsweise durch das Anordnen eines Magneten in Bezug auf einen Teil der Zustandsüberwachungsvorrichtung ausgelöst wird.

2. Die Zustandsüberwachungsvorrichtung (100; 100') nach Anspruch 1, wobei
das berührungslose Temperaturerfassungsmodul (102) ausgebildet ist, der Maschine Infrarot-(IR)-Signalisierung bereitzustellen und von der Maschine reflektierte IR-Signalisierung zu empfangen, die Informationen über die Temperatur der Maschine enthält; und wobei vorzugsweise
die Zustandsüberwachungsvorrichtung (100; 100') eine Abdeckbaugruppe (3, 12) umfasst, die ausgebildet ist, die Kombination aus integrierten Sensoren (101) und dem Zustandsüberwachungsmodul (108) aufzunehmen, wobei die Abdeckbaugruppe (3, 12) eine Bodenabdeckung (12) mit einem darin ausgebildeten Infrarotsensorfenster aufweist; und
das berührungslose Temperaturerfassungsmodul (102) ausgebildet ist, die IR-Signalisierung durch das Infrarotsensorfenster bereitzustellen und die reflektierte IR-Signalisierung zurück durch das Infrarotsensorfenster zu empfangen.

3. Die Zustandsüberwachungsvorrichtung (100; 100') nach Anspruch 1 oder 2, wobei das Magnetflusserfassungsmodul (104) ausgebildet ist, eine Fast-Fourier-Transformations-Analyse (FFT) durchzuführen und eine Drehrichtung, eine Drehzahl, eine Motorlast sowie den Motorzustand der Maschine zu ermitteln.

4. Die Zustandsüberwachungsvorrichtung (100; 100') nach einem der vorhergehenden Ansprüche, wobei das 3-Achsen-Schwingungsmessmodul (106) ausgebildet ist, eine 3-Achsen-Schwingung einer Motorwelle der Maschine zu erfassen, eine 3-Achsen-Schwingungsanalyse durchzuführen und potenzielle Lagerprobleme der Maschine zu erkennen, die mit einer 1-Achsen- oder 2-Achsen-Schwingungsanalyse nicht erkannt werden könnten, wobei die 3-Achsen-Schwingungsanalyse die Verwendung einer zur Erfassung der axialen Schwingung der Motorwelle ausgerichteten X-Achse, einer zur Erfassung der horizontalen Schwingung der Motorwelle ausgerichteten Y-Achse und einer zur Erfassung der radialen Schwingung der Motorwelle ausgerichteten Z-Achse umfasst.

5. Die Zustandsüberwachungsvorrichtung (100; 100') nach einem der vorhergehenden Ansprüche, wobei das Zustandsüberwachungsmodul (108) so konfiguriert ist, dass es ein Verfahren zur Ermittlung des Basisbetriebszustands durchführt, um der Kombination aus integrierten Sensoren (101) die Steuersignale bereitzustellen, das Basisbetriebszustandssignal zu ermitteln, das Informationen über den Basisbetriebszustand der Maschine enthält, und das Basisbetriebszustandssignal zu speichern.

6. Die Zustandsüberwachungsvorrichtung (100; 100') nach einem der vorhergehenden Ansprüche, wobei die Steuersignale ein berührungsloses IR-Temperaturerfassungs-Steuersignal, ein Magnetflusserfassungs-Steuersignal und ein 3-Achsen-Schwingungsmess-Steuersignal umfassen, um diese der Kombination aus integrierten Sensoren (101) bereitzustellen.

7. Die Zustandsüberwachungsvorrichtung (100; 100') nach einem der vorhergehenden Ansprüche, wobei die Zustandsüberwachungsvorrichtung (100; 100') ein drahtloses Kommunikationsmodul (115) umfasst, das ausgebildet ist, drahtlose Kommunikationssignalisierung mit einer anderen zur drahtlosen Kommunikation fähigen Vorrichtung (110) auszutauschen.

8. Die Zustandsüberwachungsvorrichtung (100; 100') nach Anspruch 7, wobei die drahtlose Kommunikationssignalisierung das Zustandsüberwachungssignal umfasst und/oder Bluetooth- (112), Near-Field- (115) oder Wi-Fi- (114) Kommunikationssignale umfasst.

9. Die Zustandsüberwachungsvorrichtung (100; 100') nach einem der vorhergehenden Ansprüche, wobei die Zustandsüberwachungsvorrichtung (100; 100') ein elektronisches Chip-ID-Modul umfasst, das ausgebildet ist, die Steuersignale zu empfangen und elektronische Chip-ID-Signalisierung bereitzustellen, die Informationen über eine elektronische Chip-ID (CHIP_ID) der Zustandsüberwachungsvorrichtung (100; 100') enthält.

10. Die Zustandsüberwachungsvorrichtung (100; 100') nach einem der vorhergehenden Ansprüche, wobei die Zustandsüberwachungsvorrichtung (100; 100') eine Gehäuseanordnung (3, 12) umfasst, die ausgebildet ist, die Kombination aus integrierten Sensoren (101) und das Zustandsüberwachungsmodul (108) aufzunehmen, und die Gehäuseanordnung (3, 12) eine obere Abdeckung (3) aufweist, auf die ein Quick-Response-Code (QR-Code) (118) aufgedruckt ist, der Informationen über die Zustandsüberwachungsvorrichtung (100; 100') enthält, und wobei der QR-Code (118) vorzugsweise eine ID_QR enthält, die für die Zustandsüberwachungsvorrichtung (100; 100') einzigartig ist.

11. Die Zustandsüberwachungsvorrichtung (100; 100') nach einem der vorhergehenden Ansprüche, wobei die Zustandsüberwachungsvorrichtung (100; 100') eine Leiterplattenbaugruppe (9) umfasst, auf der die Kombination aus integrierten Sensoren (101) und das Zustandsüberwachungsmodul (108) alle ausgebildet sind.

12. Die Zustandsüberwachungsvorrichtung (100; 100') nach einem der vorhergehenden Ansprüche, wobei die Zustandsüberwachungsvorrichtung (100; 100') eine Gehäuseanordnung (3, 12) umfasst, die eine obere Abdeckung (3) mit einer X-, Y-, Z-Ausrichtungsanzeige (125) aufweist, die eingegossen oder als Etikett angebracht ist, wobei die X-, Y-, Z-Ausrichtungsanzeige (125) vorzugsweise ausgebildet ist, die Zustandsüberwachungsvorrichtung (100; 100') so auszurichten, dass das 3-Achsen-Schwingungsmessmodul eine 3-Achsen-Schwingung einer Motorwelle der Maschine erfasst, wobei die X-Achsen-Ausrichtung zur Erfassung der axialen Schwingung der Motorwelle, die Y-Achsen-Ausrichtung zur Erfassung der horizontalen Schwingung der Motorwelle und die Z-Achsen-Ausrichtung zur Erfassung der radialen Schwingung der Motorwelle dient.

13. Ein System (20; 40; 60) zur Überwachung von Maschinen, wobei das System eine Zustandsüberwachungsvorrichtung (100; 100') nach Anspruch 7 umfasst, wobei das System umfasst:
ein Modul (120) zur Kopplung einer drahtlosen Kommunikation, das ausgebildet ist, eine Signalisierung zur Kopplung einer drahtlosen Kommunikation bereitzustellen, die Informationen zum Koppeln der Zustandsüberwachungsvorrichtung (100; 100') enthält;
eine Gehäuseanordnung (3, 12) mit einem darauf angeordneten Quick-Response-Code (QR-Code) (118), um gescannt zu werden, um QR-Code-Signalisierung zu empfangen, die Informationen zum Koppeln der Zustandsüberwachungsvorrichtung (100; 100') enthält; und
eine zur drahtlosen Kommunikation fähige Vorrichtung (110), die umfasst:
eine QR-Scan-App (110a), die ausgebildet ist, den QR-Code (118) zu scannen und eine QR-Code-Signalisierung zu empfangen, und
eine Kopplungs-App (110b), die ausgebildet ist, die Signalisierung zur Kopplung einer drahtlosen Kommunikation und die QR-Code-Signalisierung zu empfangen und die zur drahtlosen Kommunikation fähige Vorrichtung (110) auf der Grundlage der empfangenen Signalisierungen mit der Zustandsüberwachungsvorrichtung (100; 100') zu koppeln; und wobei
vorzugsweise die Signalisierung zur Kopplung der drahtlosen Kommunikation ein Advertisement-Paket umfasst, das eine eindeutige elektronische Identifikation des Chips für die drahtlose Kommunikation zur Identifizierung der Zustandsüberwachungsvorrichtung (100; 100') enthält; und
die QR-Code-Signalisierung eine ID_QR enthält, um diese der Zustandsüberwachungsvorrichtung (100; 100') bereitzustellen, wobei vorzugsweise die Kopplungs-App (110b) ausgebildet ist, eine Signalisierung zur eindeutigen Benutzeridentifikation, im Folgenden als UUID bezeichnet, bereitstellt, die eine Kombination aus der QR-Code-Signalisierung und der empfangenen Signalisierung zur Kopplung einer drahtlosen Kommunikation enthält, und wobei vorzugsweise ferner das Modul (120) zur Kopplung einer drahtlosen Kommunikation ausgebildet ist, die UUID-Signalisierung zu empfangen und eine aktualisierte UUID-Signalisierung zu ermitteln, die den ID_QR enthält.

14. Ein System (20; 40; 60) zur Überwachung von Maschinen, wobei das System eine Zustandsüberwachungsvorrichtung (100; 100') nach einem der Ansprüche 1 bis 12 umfasst, wobei
das System (20; 40; 60) ferner eine weitere Kombination aus einem oder mehreren Sensoren aufweist, umfassend:
einen Drucksensor, der ausgebildet ist, einen Druck eines von der Maschine verarbeiteten Fluids zu erfassen und eine Drucksensorsignalisierung bereitzustellen, die Informationen über den erfassten Druck enthält,
einen Durchflusssensor, der ausgebildet ist, einen Durchfluss des von der Maschine verarbeiteten Fluids zu erfassen und eine Durchflusssensorsignalisierung bereitzustellen, die Informationen über den erfassten Durchfluss enthält,
einen Fluidqualitätssensor, der ausgebildet ist, eine Qualität des von der Maschine verarbeiteten Fluids zu erfassen und eine Fluidqualitätssensorsignalisierung bereitzustellen, die Informationen über die erfasste Fluidqualität enthält,
einen Motorbetriebszustandssensor, der ausgebildet ist, einen Zustand eines die Maschine antreibenden Motors zu erfassen und eine Motorbetriebszustandssensorsignalisierung bereitzustellen, die Informationen über den erfassten Zustand des Motors enthält,
einen Motorlastzustandssensor, der ausgebildet ist, einen Lastzustand eines die Maschine antreibenden Motors zu erfassen und eine Motorlastzustandssensorsignalisierung bereitzustellen, die Informationen über den erfassten Lastzustand des Motors enthält,
einen Stromverbrauchs- oder Wirkungsgradsensor, der ausgebildet ist, einen Stromverbrauch oder einen Wirkungsgrad der Maschine zu erfassen und eine Stromverbrauchs- oder Wirkungsgradsensorsignalisierung zu liefern, die Informationen über den erfassten Stromverbrauch oder Wirkungsgrad der Maschine enthält, und
einen Fluidviskositätssensor, der ausgebildet ist, die Viskosität des von der Maschine verarbeiteten Fluids zu erfassen und eine Fluidviskositätssensorsignalisierung zu liefern, die Informationen über die erfasste Viskosität des Fluids enthält.

## Revendications

1. Un dispositif de surveillance d'état (100 ; 100') destiné à surveiller des machines ou des équipements, comprenant
une combinaison de capteurs embarqués (101) qui comprennent
un module de détection de température sans contact (102) configuré pour recevoir des signaux de commande et fournir un signal de détection de température sans contact contenant des informations sur la température de la machine ou de l'équipement sans contact direct entre le module de détection de température sans contact et la machine ou l'équipement,
un module de détection de flux magnétique (104) configuré pour recevoir les signaux de commande et fournir un signal de détection de flux magnétique contenant des informations sur le flux magnétique détecté à partir de la machine ou de l'équipement, et
un module de mesure des vibrations sur trois axes (106) configuré pour recevoir les signaux de commande et fournir un signal de mesure des vibrations sur trois axes contenant des informations relatives à la mesure des vibrations sur trois axes de la machine ou de l'équipement ; et
un module de surveillance de l'état (108) configuré pour
fournir les signaux de commande à l'ensemble de capteurs embarqués (101),
recevoir un signal d'état de fonctionnement de référence contenant des informations relatives à un état de fonctionnement de référence de la machine ou de l'équipement,
recevoir le signal de détection de température sans contact, le signal de détection de flux magnétique et le signal de mesure des vibrations sur trois axes provenant de l'ensemble de capteurs embarqués (101), et
fournir un signal de surveillance de l'état contenant des informations sur un état de fonctionnement de la machine ou de l'équipement, sur la base d'une technique de surveillance de l'état par synthèse de données qui synthétise les données de détection de température sans contact, de flux magnétique et de vibrations sur trois axes reçues de l'ensemble de capteurs embarqués (101), détermine un état de fonctionnement actuel de la machine ou de l'équipement, et compare l'état de fonctionnement actuel et l'état de fonctionnement de référence de la machine ou de l'équipement pour déterminer l'état de fonctionnement,
**caractérisé en ce que** le dispositif de surveillance d'état (100 ; 100') comprend un module de configuration initiale configuré pour répondre à une signalisation de configuration initiale et mettre sous tension le module de surveillance d'état (108), la signalisation de configuration initiale étant une signalisation magnétique, telle que celle provoquée par le placement d'un aimant par rapport à une partie du dispositif de surveillance d'état.

2. Le dispositif de surveillance d'état (100 ; 100') selon la revendication 1, dans lequel
le module de détection de température sans contact (102) est configuré pour émettre une signalisation infrarouge (IR) vers la machine et recevoir une signalisation IR réfléchie par la machine contenant des informations sur la température de celle-ci ; et dans lequel, de préférence,
le dispositif de surveillance d'état (100 ; 100') comprend un ensemble de couvercles (3, 12) configuré pour contenir l'ensemble de capteurs embarqués (101) et le module de surveillance d'état (108), l'ensemble de couvercles (3, 12) comportant un couvercle inférieur (12) dans lequel est configurée une fenêtre de capteur infrarouge ; et
le module de détection de température sans contact (102) est configuré pour émettre la signalisation IR à travers la fenêtre du capteur infrarouge et pour recevoir la signalisation IR réfléchie en retour à travers ladite fenêtre du capteur infrarouge.

3. Le dispositif de surveillance d'état (100 ; 100') selon la revendication 1 ou 2, dans lequel le module de détection de flux magnétique (104) est configuré pour mettre en œuvre une analyse par transformée de Fourier rapide (FFT) et pour déterminer le sens de rotation, la vitesse de rotation, la charge du moteur et l'état de santé du moteur de la machine.

4. Le dispositif de surveillance d'état (100 ; 100') selon l'une des revendications précédentes, dans lequel le module de mesure des vibrations sur trois axes (106) est configuré pour détecter les vibrations sur trois axes d'un arbre de moteur de la machine, pour effectuer une analyse des vibrations sur trois axes et pour détecter d'éventuels problèmes de roulements de la machine qui ne pourraient pas être détectés à l'aide d'une analyse des vibrations sur un ou deux axes, notamment lorsque l'analyse des vibrations sur trois axes comprend l'utilisation d'un axe X aligné pour détecter les vibrations axiales de l'arbre du moteur, d'un axe Y aligné pour détecter les vibrations horizontales de l'arbre du moteur et d'un axe Z aligné pour détecter les vibrations radiales de l'arbre du moteur.

5. Le dispositif de surveillance d'état (100 ; 100') selon l'une des revendications précédentes, dans lequel le module de surveillance d'état (108) est configuré pour mettre en œuvre une technique d'état de fonctionnement de référence afin de fournir les signaux de commande à l'ensemble de capteurs embarqués (101), de déterminer le signal d'état de fonctionnement de référence contenant des informations sur l'état de fonctionnement de référence de la machine, et de stocker le signal d'état de fonctionnement de référence.

6. Le dispositif de surveillance d'état (100 ; 100') selon l'une des revendications précédentes, dans lequel les signaux de commande comprennent un signal de commande de détection de température par infrarouge sans contact, un signal de commande de détection de flux magnétique et un signal de commande de mesure de vibrations sur trois axes destinés à être fournis à l'ensemble de capteurs embarqués (101).

7. Le dispositif de surveillance d'état (100 ; 100') selon l'une des revendications précédentes, dans lequel le dispositif de surveillance d'état (100 ; 100') comprend un module de communication sans fil (115) configuré pour échanger une signalisation de communication sans fil avec un autre dispositif (110) doté d'une capacité de communication sans fil.

8. Le dispositif de surveillance d'état (100 ; 100') selon la revendication 7, dans lequel la signalisation de communication sans fil comprend le signal de surveillance d'état, et/ou comprend une signalisation de communication Bluetooth (112), NFC (115) ou Wi-Fi (114).

9. Le dispositif de surveillance d'état (100 ; 100') selon l'une des revendications précédentes, dans lequel le dispositif de surveillance d'état (100 ; 100') comprend un module d'identification électronique par puce configuré pour recevoir les signaux de commande et fournir une signalisation d'identification électronique par puce contenant des informations sur une identification électronique par puce (CHIP_ID) du dispositif de surveillance d'état (100 ; 100').

10. Le dispositif de surveillance d'état (100 ; 100') selon l'une des revendications précédentes, dans lequel le dispositif de surveillance d'état (100 ; 100') comprend un ensemble de couvercles (3, 12) configuré pour contenir l'ensemble de capteurs embarqués (101) et le module de surveillance de l'état (108), et l'ensemble de couvercles (3, 12) comporte un couvercle supérieur (3) sur lequel est imprimé un code QR (118) contenant des informations sur le dispositif de surveillance d'état (100 ; 100'), et de préférence où le code QR (118) contient un ID_QR qui est unique au dispositif de surveillance d'état (100 ; 100').

11. Le dispositif de surveillance d'état (100 ; 100') selon l'une des revendications précédentes, dans lequel le dispositif de surveillance d'état (100 ; 100') comprend un ensemble de carte de circuit imprimé (9) sur lequel sont configurés à la fois les capteurs intégrés (101) et le module de surveillance d'état (108).

12. Le dispositif de surveillance d'état (100 ; 100') selon l'une des revendications précédentes, dans lequel le dispositif de surveillance d'état (100 ; 100') comprend un ensemble de couvercles (3, 12) comportant un couvercle supérieur (3) muni d'un indicateur d'orientation X, Y, Z (125) moulé ou apposé sous forme d'étiquette, indiquant de préférence l'emplacement où l'indicateur d'orientation X, Y, Z (125) est configuré pour orienter le dispositif de surveillance d'état (100 ; 100') de telle sorte que le module de mesure des vibrations sur trois axes détecte les vibrations sur trois axes d'un arbre moteur de la machine avec un alignement selon l'axe X pour détecter les vibrations axiales de l'arbre moteur, un alignement selon l'axe Y pour détecter les vibrations horizontales de l'arbre moteur et un alignement selon l'axe Z pour détecter les vibrations radiales de l'arbre moteur.

13. Un système (20 ; 40 ; 60) de surveillance de machines, dans lequel le système comprend un dispositif de surveillance d'état (100 ; 100') selon la revendication 7, dans lequel le système comprend :
un module d'appairage par communication sans fil (120) configuré pour fournir une signalisation d'appairage par communication sans fil contenant des informations permettant d'appairer le dispositif de surveillance d'état (100 ; 100') ;
un ensemble de couvercles (3, 12) sur lequel est disposé un code QR (118) destiné à être scanné afin de recevoir une signalisation par code QR contenant des informations pour l'appairage du dispositif de surveillance d'état (100 ; 100') ; et
un dispositif (110) doté d'une capacité de communication sans fil comprenant :
une application de lecture de codes QR (110a) configurée pour lire le code QR (118) et recevoir une signalisation par code QR, et
une application de couplage (110b) configurée pour recevoir la signalisation de couplage par communication sans fil et la signalisation par code QR, et pour coupler le dispositif (110) doté d'une capacité de communication sans fil au dispositif de surveillance d'état (100 ; 100') sur la base de la signalisation reçue ; et dans lequel
de préférence, la signalisation de couplage par communication sans fil comprend un paquet de diffusion comportant une identification électronique unique de la puce de communication sans fil permettant d'identifier le dispositif de surveillance d'état (100 ; 100') ; et
la signalisation par code QR contient un ID_QR destiné à être renvoyé au dispositif de surveillance d'état (100 ; 100'), comprenant de préférence, lorsque l'application de couplage (110b) est configurée pour fournir une identification utilisateur unique, ci-après dénommée UUID, une signalisation contenant une combinaison de la signalisation par code QR et de la signalisation de couplage par communication sans fil reçues, et comprenant de préférence en outre, lorsque le module de couplage par communication sans fil (120) est configuré pour recevoir la signalisation UUID, et détermine une signalisation UUID mise à jour contenant l'ID_QR.

14. Un système (20 ; 40 ; 60) de surveillance de machines, le système comprenant un dispositif de surveillance d'état (100 ; 100') selon l'une des revendications 1 à 12, dans lequel
le système (20 ; 40 ; 60) comprend en outre une combinaison supplémentaire d'un ou plusieurs capteurs, comprenant :
un capteur de pression configuré pour détecter la pression d'un fluide traité par la machine et fournir une signalisation de capteur de pression contenant des informations sur la pression détectée,
un capteur de débit configuré pour détecter le débit du fluide traité par la machine et fournir une signalisation de capteur de débit contenant des informations sur le débit détecté,
un capteur de qualité du fluide configuré pour détecter la qualité du fluide traité par la machine et fournir une signalisation de capteur de qualité du fluide contenant des informations sur la qualité du fluide détectée,
un capteur d'état de fonctionnement du moteur configuré pour détecter l'état d'un moteur faisant fonctionner la machine et pour fournir une signalisation de capteur d'état de fonctionnement du moteur contenant des informations sur l'état détecté du moteur,
un capteur d'état de charge du moteur configuré pour détecter l'état de charge d'un moteur faisant fonctionner la machine et pour fournir une signalisation de capteur d'état de charge du moteur contenant des informations sur l'état de charge détecté du moteur,
un capteur de consommation d'énergie ou de rendement, configuré pour détecter la consommation d'énergie ou le rendement de la machine et pour fournir une signalisation de capteur de consommation d'énergie ou de rendement contenant des informations sur la consommation d'énergie ou le rendement détectés de la machine, et
un capteur de viscosité du fluide, configuré pour détecter la viscosité du fluide traité par la machine et pour fournir une signalisation de capteur de viscosité du fluide contenant des informations sur la viscosité du fluide détectée.
